(19) Europäisches Patentamt / European Patent Office / Office européen des brevets

(11) **EP 2 581 203 B1**

(12) **FASCICULE DE BREVET EUROPEEN**

(45) Date de publication et mention
de la délivrance du brevet:
**11.12.2013   Bulletin 2013/50**

(51) Int Cl.:
***B29C 70/56*** *(2006.01)*      ***B29C 53/04*** *(2006.01)*

(21) Numéro de dépôt: **12188342.5**

(22) Date de dépôt: **12.10.2012**

(54) **Procédé de fabrication de pièces composites**

Verfahren zur Herstellung von Verbundwerkstücken

Process for manufacturing composite parts

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **14.10.2011   FR 1159301**

(43) Date de publication de la demande:
**17.04.2013   Bulletin 2013/16**

(73) Titulaire: **AIRBUS OPERATIONS (S.A.S)**
**31060 Toulouse (FR)**

(72) Inventeur: **Godenzi, Christian**
**31770 COLOMIERS (FR)**

(74) Mandataire: **Gicquel, Olivier Yves Gérard**
**Airbus Opérations (S.A.S.)**
**Intellectual Property Department**
**316, route de Bayonne**
**ETRT - M0101/1**
**31060 Toulouse (FR)**

(56) Documents cités:
WO-A1-86/02314      JP-A- 63 109 039
US-A- 3 009 201      US-A- 4 334 947
US-A- 5 102 609      US-A- 5 344 602

• **RAMANI K ET AL: "DIE-LESS FORMING OF
THERMOPLASTIC-MATRIX CONTINUOUS FIBER
COMPOSITEMATERIALS - PROCESS AND
DEMONSTRATION", TRANSACTIONS OF THE
AMERICAN SOCIETY OF MECHANICAL
ENGINEERS,SERIES B: JOURNAL OF
ENGINEERING FOR INDUSTRY, ASME. NEW
YORK, US, vol. 117, no. 4, 1 novembre 1995
(1995-11-01), pages 501-507, XP000541187, ISSN:
0022-0817**

**Description**

La présente invention concerne un procédé de fabrication de pièces composites et notamment de pièces à empilage de couches comportant au moins un pli.

La réalisation de pièces composites pré-imprégnées et en particulier celles réalisées à partir d'un empilage de couches de matériau composite pré-imprégné comporte généralement une étape de drapage à plat des couches déposées les unes sur les autres.

Lorsque l'on réalise des pièces comportant des courbures ou des plis on procède à un pliage des pièces après drapage ce qui comporte une difficulté du fait que le pliage de ces pièces avant polymérisation peut conduire à des défauts dans les zones de pliages et notamment à des fronces ou ondulations. Par exemple,

WO 86/02314 décrit un dispositif de pliage d'une plaque en TD comportant un bras rotatif télescopique articulé sur un support disposé du côté opposé au gabarit de pliage par rapport à la pièce.

Dans le cas de résines collantes ou peu fluides, les couches ont du mal à glisser les unes sur les autres et les couches de plus faible rayon vont avoir tendance à se plisser sous l'action de l'outil de pliage.

Ceci est particulièrement gênant dans le cas de pièces de grandes dimensions et de pièces structurelles comme des pièces composites de tronçons d'aéronefs car ce type de défaut peut causer le rebut de pièces onéreuses ou obliger à concevoir des pièces renfort ce qui est défavorable pour la production.

La présente invention vise à pallier à ce problème et propose pour ce faire un procédé de fabrication de pièces en matériau composite comportant au moins un pliage qui comporte pour ledit pliage la réalisation d'un pli et d'un contre-pli, le contre-pli étant de direction opposée au pli, ledit contre-pli étant adapté à équilibrer des contraintes du matériau au niveau du pli entre la face interne et la face externe du pli en sorte de tendre la face interne du pli ce qui évite un plissage  de la face interne du pli au moyen d'un glissement des fibres de la face interne du pli.

Préférablement, le pli et le contre pli sont réalisés simultanément.

Avantageusement, le pli et lé contre pli sont réalisés après une opération de drapage du matériau composite.

Selon un mode de réalisation particulier, le drapage est un drapage à plat ou à faible courbure et comporte un drapage de couches successives de matériaux composites.

Avantageusement, le pli et le contre-pli sont réalisés selon des paramètres tels que $(\pi \times A_1° \times (Re_1 - Ri_1) / 180 ) - (\pi \times A_2° \times (Re_2 - Ri_2) / 180 )$ compris entre 0,5 et -0,5 mm.

Le procédé comporte préférablement une étape de polymérisation d'un liant du matériau composite après pliage.

Selon un premier mode de réalisation, le procédé comporte une étape de suppression d'une partie hors pièce comportant le contre-pli.

Selon un deuxième mode de réalisation, le procédé est tel que le pli et le contre-pli forment des plis symétriques de deux pièces pliées ensemble et ensuite séparées par découpe entre le pli et le contre pli.

Selon un troisième mode de réalisation, le procédé est tel qu'on forme le pli et le contre-pli en tant que plis de direction opposée d'un profilé.

L'invention concerne en outre un outillage de pliage de pièces en matériau composite qui comporte un dispositif de cintrage pourvu d'un bras articulé sur un gabarit de pliage à une première de ses extrémités et articulé sur une seconde forme de pliage à une seconde de ses extrémités.

Avantageusement, le dispositif de cintrage est configuré pour que la cinématique du bras et de la forme de pliage asservisse l'angle du contre-pli à l'angle du pli pendant la rotation du bras.

L'outillage de pliage est avantageusement tel que les première et seconde forme de pliage sont solidaires de pignons reliés par une courroie sans glissement, la rotation du bras autour de la première forme de pliage entraînant la seconde forme de pliage en position de réalisation du pli et du contre-pli.

L'outillage de pliage comprend avantageusement un mors en regard de la seconde forme de pliage, le mors et la seconde forme de pliage étant adaptés à pincer la pièce sans glissement.

D'autres caractéristiques et avantages de l'invention seront apparents à la lecture de la description qui suit d'un exemple non limitatif de réalisation de l'invention en référence aux dessins qui représentent:

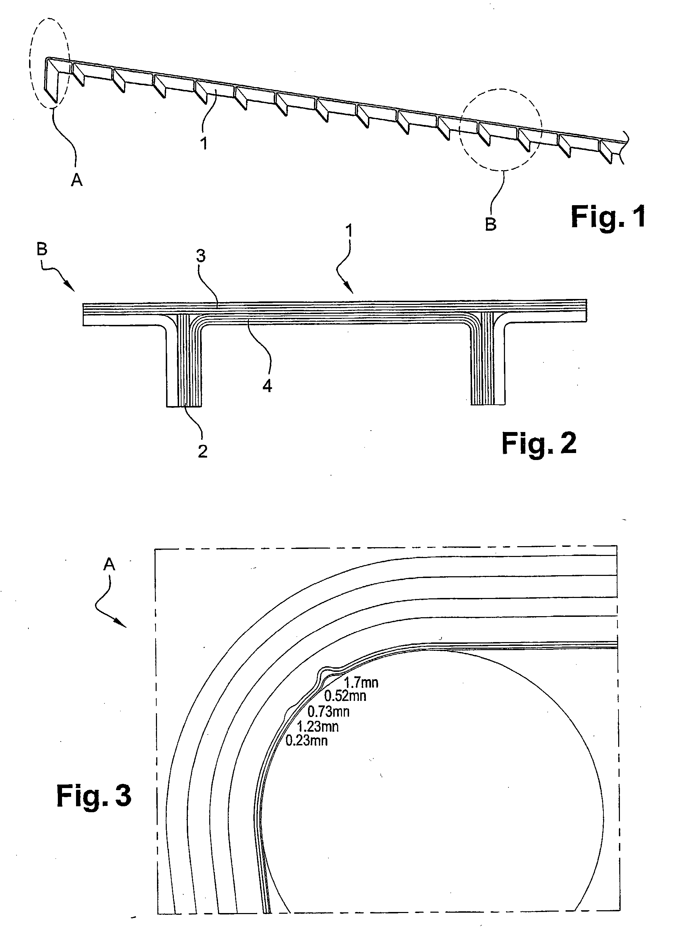

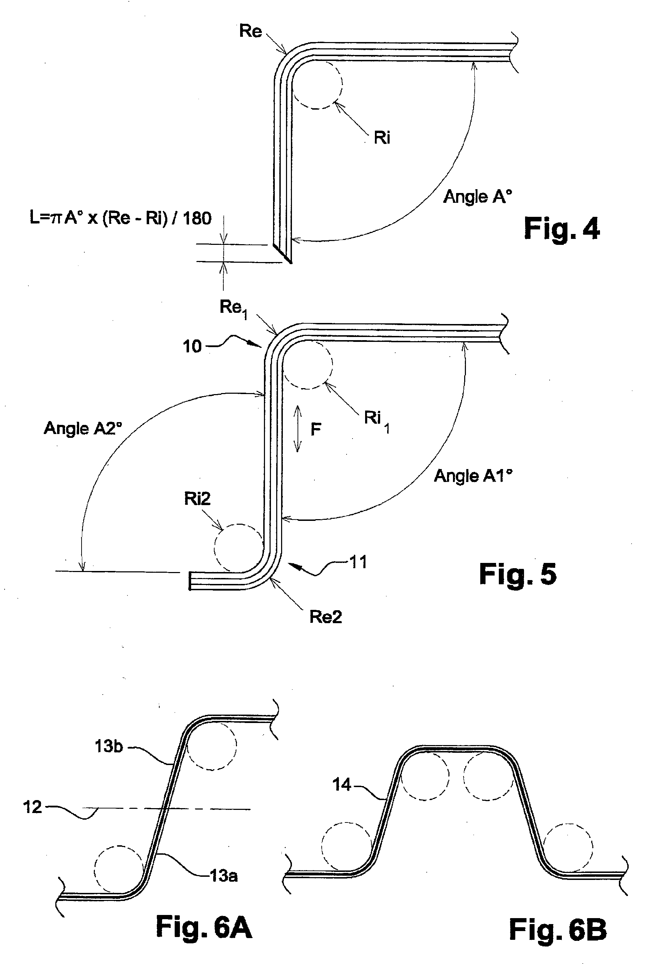

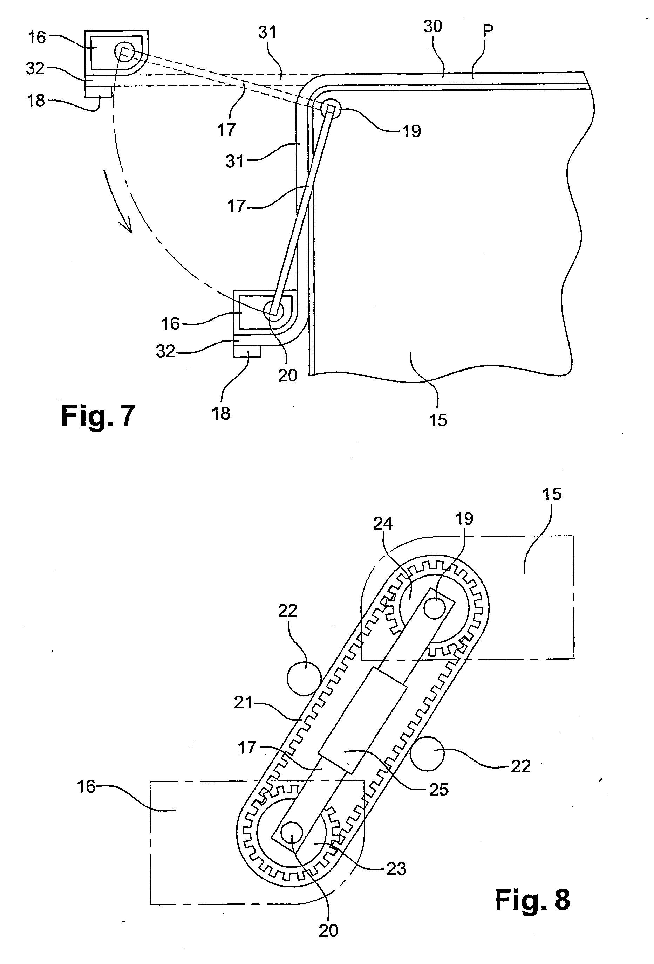

en figure 1: un exemple de panneau composite réalisé avec plusieurs pliages,
en figure 2: un détail de la pièce de la figure 1;
en figure 3: un détail de la pièce de la figure 1 pliée selon l'art antérieur et présentant un défaut de pliage;
en figure 4: une vue schématique des déplacements de fibres nécessaire à un simple pli sans défaut;
en figure 5: une vue schématique d'un exemple de pliage du procédé de l'invention;
aux figures 6A et 6B: deux exemples de pièces réalisables selon le procédé de l'invention;
en figure 7: une vue schématique d'un dispositif de pliage adapté au procédé de l'invention;
en figure 8: un moyen de synchronisation de formes de pliage adapté au procédé de l'invention.

La figure 1 représente une panneau composite 1 utilisé dans l'aéronautique de type panneau extrados avant de tronçon d'aéronef.

Un tel panneau réalisé en matériau composite comprenant des tissus de fibres et une résine formant liant comprend, comme représenté en figure 2 correspondant au détail B de la figure 1, plusieurs pièces composites formées, assemblées et collées.

Ce panneau 1 comprend selon cet exemple des raidisseurs 2, une plaque arrière 3 et des plaques pliées 4.

Dans la technique actuelle de fabrication, des défauts peuvent apparaitre au niveau des pliages comme représenté à la figure 3 correspondant à une photo d'une coupe du matériau au niveau du détail A de la figure 1.

Les défauts sont des ondulations ou fronces de la zone de courbure interne au pliage.

Ces défauts de petites dimensions, ici de l'ordre de quelques millimètres sont toutefois susceptibles de conduire au rebut du panneau dont le coût est élevé.

La figure 4 représente un pliage théorique correct présentant un rayon externe Re et un rayon interne Ri avec un angle de pliage A pour lequel les plis de matière peuvent glisser librement sans frottement, entre eux.

Dans un tel cas on observe un décalage de longueur L entre le pli interne au pliage et le pli externe, L répondant à la formule L = $\pi$ x A° x (Re - Ri) / 180, A° étant la mesure de l'angle A en degrés.

Dans la réalité illustrée par la figure 3 durant le pliage, le glissement entre les plis pré-imprégnés de résine est réduit du fait que la viscosité de la résine et les frottements entre les plis s'opposent aux glissements libres des plis en eux ce qui provoque des défauts de type ondulations ou fronces repérés par leurs dimension, au niveau du rayon interne Ri.

Ce problème apparaît sur toutes les pièces composites pré-imprégnées drapées à plat puis pliées et en particulier sur les pièces épaisses utilisant des résines à forte viscosité.

Le principe de la présente invention consiste à réaliser un double pliage, l'un suivant une première rotation, l'autre suivant une seconde rotation opposée pour forcer le glissement des fibres ou des couches de fibres les unes sur les autres dans les parties pliées.

Ainsi lorsque l'on veut réaliser un pliage, on réalise un pli et un contre-pli, le contre-pli étant de direction opposée au pli.

Le pli et le contre pli sont réalisés après une opération de drapage à plat ou à faible courbure du matériau composite.

L'invention s'applique particulièrement lorsque le drapage à plat comporte un drapage de couches successives de matériaux composites.

La méthode de l'invention schématisée à la figure 5 associe un contre-pli 11 à chaque pli 10.

Pour que les fibres aient le même déplacement, il faut satisfaire l'équation théorique:

$$( \pi \text{ x } A_1° \text{ x } (R_e1 - R_i1) / 180 ) - ( \pi \text{ x } A_2° \text{ x } (R_e2 - R_i2) / 180 ) = 0$$

ce qui revient à $A_1$ x $(R_e1 - R_i1) = A_2$ x $(R_e2 - R_i2)$
équation dans laquelle $A_1°$ est l'angle de pliage exprimé en degrés du premier pli 10, $R_e1$ est le rayon externe de ce premier pli, $R_i1$ son rayon interne, $A_2°$ est l'angle de pliage du contre-pli 11 exprimé en degrés, $R_e2$ le rayon externe du contre-pli 11 et $R_i2$ son rayon interne.

Les paramètres du second pliage peuvent être notamment ajustés en fonction de l'épaisseur du matériau, en fonction de la résine, des fibres et du moyen de fabrication si une tolérance est possible, pour conserver un pliage correct et satisfaire l'équation ci-dessus permet d'améliorer la qualité des pliages.

Le contre-pli, qui est réalisé à proximité du pli, est adapté à équilibrer les contraintes du matériau au niveau du pli.

Dans la pratique on acceptera une légère erreur sur le calcul et une valeur comprise en -0,5 et +0,5 sera acceptable.

Toujours dans le but d'obtenir un pliage exempt de défauts il est préférable de synchroniser le double pliage pour contrôler le déplacement des fibres et pour éliminer les contraintes génératrices des ondulations, le pli et le contre-pli étant réalisés simultanément.

Il est de même préférable d'appliquer un effort F qui va tendre les fibres et favoriser le glissement de ces fibres les unes sur les autres.

Une fois la pièce pliée, on coupe si nécessaire le morceau inutile comportant le contre pli et on polymérise la pièce comme connu en étuve ou dans un four selon la résine employée, la suppression de la partie inutile ou partie hors pièce comportant le contre-pli pouvant aussi être réalisée après durcissement ou polymérisation.

Ce principe de maitrise des déplacements de fibre peut-être aussi appliqué sur une succession de pliages et par exemple:

- la figure 6A utilise le double pliage avec pli et contre-pli pour plier de deux cornières 13a, 13b comportant des plis de même rayon, ces cornières étant séparées par découpe au niveau de l'axe 12;

- la figure 6B correspond à la réalisation d'un profil en oméga 14 à plis de rayons identiques deux à deux plié suivant le principe de l'invention.

La figure 7 représente schématiquement un outillage adapté au procédé de l'invention pour le pliage d'une pièce P. L'outillage comporte en plus du gabarit de pliage 15 traditionnel, un dispositif de cintrage pourvu d'un bras 17 articulé à une première extrémité par une liaison rotative 19 sur le gabarit 15 et porteur à une seconde extrémité d'une forme de pliage 16 adaptée à la réalisation du contre-pli.

La forme de pliage 16 est associée à un mors 18, la forme de pliage et le mors étant adaptés pour serrer l'extrémité de la pièce subissant le contre-pli.

Pour réaliser le pliage, l'opérateur positionne le bras 17 de façon à ce que la forme de pliage 16 soit dans le prolongement de la surface d'appui de la pièce P sur le gabarit 15.

La pièce P est posée sur le gabarit 15 de sorte qu'elle comporte une partie 30 en appui sur le gabarit, un pan 31 dépassant du gabarit 15, l'extrémité libre 32 du pan se positionnant entre la forme de pliage 16 et le mors 18.

L'opérateur serre l'extrémité libre de la pièce entre le mors 18 et la forme de pliage 16.

Ensuite le bras 17 est mis en rotation pour plier la pièce sur le gabarit 15.

Dans le même temps, la forme de pliage 16 déplacée par le bras 17 tord l'extrémité de la pièce dans un sens contraire au sens de pliage sur le gabarit 15 et met en tension le pan 31 de la pièce entre les deux zones de pliage pour imposer un glissement des fibres des couches de composite les unes sur les autres et ainsi supprimer les ondulations au niveau des rayons internes du pli et du contre-pli.

La forme de pliage 16 reste horizontale lors de son déplacement. Ceci permet d'équilibrer la tension sur la pièce et de maintenir les angles de pliage du pli et du contre-pli identiques tout au long du pliage.

L'outillage est ainsi configuré pour que la cinématique du bras 17 et de la forme de pliage 16 asservisse l'angle du contre-pli à l'angle du pli pendant la rotation du bras.

La figure 8 décrit un exemple de dispositif adapté à contrôler le déplacement de la forme de pliage 16 lors de la rotation du bras déformant la pièce et à asservir l'angle du contre-pli à l'angle du pli autrement dit à rendre égaux l'angle de l'extrémité 32 par rapport au pan 31 et l'angle du pan 31 par rapport à la partie 30 de la pièce en appui sur le gabarit tout au long du pliage.

Ce dispositif comporte un premier pignon 23 solidaire de la forme de pliage 16 et un second pignon 24 solidaire du gabarit de pliage 15.

Les premier et second pignons 23, 24 sont reliées par une courroie sans glissement 21 telle qu'une courroie crantée ou une chaine alors que les extrémités du bras 17 sont montées sur des axes 19, 20 libres en rotation par rapport aux pignons 23, 24.

De cette façon, lors de la rotation du bras l'inclinaison de la forme de pliage 16 reste constante par rapport au gabarit 15 ce qui assure une mise en tension de la partie de pièce entre le pli et le contre-pli.

En outre, la longueur du bras est réglable au moyen d'une bielle réglable 25 pour ajuster la distance entre le pli et le contre-pli et des galets de rattrapage de jeu 22 maintiennent la courroie en tension.

L'invention n'est pas limitée à l'exemple représenté et notamment l'outillage de pliage peut être doublé dans le cas d'une cornière telle que celle de la figure 6B.

**Revendications**

1. Outillage de pliage de pièces en matériau composite, **caractérisé en ce qu'il** comporte un dispositif de cintrage pourvu d'un bras (17) rotatif, articulé sur un gabarit de pliage (15) à une première de ses extrémités et articulé sur une forme de pliage (16) à une seconde de ses extrémités, le dispositif de cintrage étant configuré pour que la cinématique du bras (17) et de la forme de pliage (16) asservisse l'angle du contre-pli à l'angle du pli pendant la rotation du bras et comprenant pour ce faire:

   - des moyens de serrage de l'extrémité libre de la pièce entre un mors (18) et la forme de pliage (16);
   - des moyens de mise en rotation du bras (17) pour plier la pièce sur le gabarit (15) simultanément à un déplacement de la forme de pliage (16) par le bras (17) et,
   - des moyens de maintien d'une inclinaison constante de la forme de pliage (16) par rapport au gabarit (15) ce qui assure une mise en tension de la partie de pièce entre le pli et le contre-pli.

2. Outillage de pliage selon la revendication 1, pour lequel le gabarit de pliage et la forme de pliage sont solidaires de pignons reliés par une courroie sans glissement, la rotation du bras autour du gabarit de pliage entraînant la forme de pliage en position de réalisation du pli et du contre-pli.

**3.** Outillage de pliage selon la revendication 1 ou 2, qui comprend un mors en regard de la forme de pliage, le mors et la forme de pliage étant adaptés à pincer la pièce sans glissement.

**4.** Procédé de fabrication de pièces en matériau composite comportant au moins un pliage au moyen d'un dispositif selon l'une quelconque des revendications précédentes, **caractérisé en ce qu'il** comporte pour ledit pliage la réalisation d'un pli et d'un contre-pli, le contre-pli étant de direction opposée au pli, ledit pliage étant adapté à équilibrer, au moyen du contre pli, des contraintes du matériau au niveau du pli entre la face interne et la face externe du pli en sorte de tendre la face interne du pli, le pli et le contre pli étant réalisés simultanément, ledit procédé comprenant:

- une étape de serrage de l'extrémité libre de la pièce entre le mors (18) et la forme de pliage (16);
- une étape de mise en rotation du bras (17) pour plier la pièce sur le gabarit (15) simultanément à un déplacement de la forme de pliage (16) par le bras (17) en sorte de tordre l'extrémité de la pièce dans un sens contraire au sens de pliage sur le gabarit (15) et de mettre en tension le pan (31) de la pièce entre les deux zones de pliage pour imposer un glissement des fibres des couches de composite les unes sur les autres et ainsi supprimer les ondulations au niveau des rayons internes du pli et du contre-pli.

**5.** Procédé de fabrication de pièces en matériau composite selon la revendication 4, pour lequel le pli et le contre pli sont réalisés après une opération de drapage du matériau composite.

**6.** Procédé de fabrication de pièces en matériau composite selon la revendication 5, pour lequel le drapage est un drapage à plat ou à faible courbure et comporte un drapage de couches successives de matériaux composites.

**7.** Procédé de fabrication de pièces en matériau composite selon l'une quelconque des revendications 4 à 6, pour lequel le pli et le contre-pli sont réalisés selon des paramètres tels que ( $\pi$ x A1 ° x (Re1 - Ri1) / 180) - ($\pi$ x A2° - x (Re2 - Ri2) / 180 ) compris entre 0,5 et -0,5 mm.

**8.** Procédé de fabrication de pièces en matériau composite selon l'une quelconque des revendications 4 à 7, qui comporte une étape de polymérisation d'un liant du matériau composite après pliage.

**9.** Procédé de fabrication de pièces en matériau composite selon la revendication 8, qui comporte une étape de suppression d'une partie hors pièce comportant le contre-pli.

**10.** Procédé de fabrication de pièces en matériau composite selon l'une quelconque des revendications 4 à 8, dans lequel le pli et le contre-pli forment des plis symétriques de deux pièces pliées ensemble et ensuite séparées par découpe entre le pli et le contre pli.

**11.** Procédé de fabrication de pièces en matériau composite selon l'une quelconque des revendications 4 à 8, pour lequel on forme le pli et le contre-pli en tant que plis de direction opposée d'un profilé.

**Patentansprüche**

**1.** Werkzeug zum Biegen von Bauteilen aus Verbundwerkstoff, **dadurch gekennzeichnet, dass** es eine Rundbiegevorrichtung aufweist, die mit einem Dreharm (17) versehen ist, der an einem ersten seiner Enden an eine Biegeschablone (15) angelenkt und an einem zweiten seiner Enden an eine Biegeform (16) angelenkt ist, wobei die Rundbiegevorrichtung konfiguriert ist, damit die Kinematik des Arms (17) und der Biegeform (16) beim Drehen des Arms den Winkel der Gegenbiegung dem Winkel der Biegung nachführt, und hierzu enthält:

- Einrichtungen zum Einspannen des freien Endes des Bauteils zwischen einer Klemmbacke (18) und der Biegeform (16);
- Einrichtungen zum Drehen des Arms (17), um das Bauteil auf der Schablone (15) gleichzeitig mit einer Verschiebung der Biegeform (16) durch den Arm (17) zu biegen, und
- Einrichtungen zur Beibehaltung einer konstanten Neigung der Biegeform (16) bezüglich der Schablone (15), was ein Unterspannungsetzen des Teils des Bauteils zwischen der Biegung und der Gegenbiegung gewährleistet.

**2.** Biegewerkzeug nach Anspruch 1, bei der die Biegeschablone und die Biegeform fest mit Ritzeln verbunden sind, die über einen Riemen schlupffrei verbunden sind, wobei die Drehung des Arms um die Biegeschablone die Biegeform in die Stellung der Herstellung der Biegung und der Gegenbiegung bringt.

3. Biegewerkzeug nach Anspruch 1 oder 2, das eine Klemmbacke gegenüber der Biegeform enthält, wobei die Klemmbacke und die Biegeform das Bauteil schlupffrei einklemmen können.

4. Verfahren zur Herstellung von Bauteilen aus Verbundwerkstoff, das mindestens ein Biegen mit Hilfe einer Vorrichtung nach einem der vorhergehenden Ansprüche aufweist, **dadurch gekennzeichnet, dass** es für das Biegen die Herstellung einer Biegung und einer Gegenbiegung aufweist, wobei die Gegenbiegung eine zur Biegung entgegengesetzte Richtung hat, wobei das Biegen geeignet ist, um mittels der Gegenbiegung Spannungen des Materials im Bereich der Biegung zwischen der Innenseite und der Außenseite der Biegung auszugleichen, um die Innenseite der Biegung zu spannen, wobei die Biegung und die Gegenbiegung gleichzeitig hergestellt werden, wobei das Verfahren enthält:

  - einen Schritt des Einspannens des freien Endes des Bauteils zwischen der Klemmbacke (18) und der Biegeform (16);
  - einen Schritt des Drehens des Arms (17), um das Bauteil auf der Schablone (15) gleichzeitig mit einer Verschiebung der Biegeform (16) durch den Arm (17) zu biegen, um das Ende des Bauteils in einer Gegenrichtung zur Biegerichtung auf der Schablone (15) zu verdrehen und das Stück (31) des Bauteils zwischen den zwei Biegezonen unter Spannung zu setzen, um einen Schlupf der Fasern der Verbundschichten aufeinander zu erzwingen und so die Welligkeiten im Bereich der Innenradien der Biegung und der Gegenbiegung zu entfernen.

5. Verfahren zur Herstellung von Bauteilen aus Verbundwerkstoff nach Anspruch 4, bei dem die Biegung und die Gegenbiegung nach einem Vorgang des Drapierens des Verbundwerkstoffs hergestellt werden.

6. Verfahren zur Herstellung von Bauteilen aus Verbundwerkstoff nach Anspruch 5, wobei das Drapieren ein Flachdrapieren oder mit geringer Krümmung ist und e i n Drapieren von aufeinanderfolgenden Verbundschichten aufweist.

7. Verfahren zur Herstellung von Bauteilen aus Verbundwerkstoff nach einem der Ansprüche 4 bis 6, bei dem die Biegung und die Gegenbiegung gemäß Parametern wie $(\pi \times A1° \times (Re1 - Ri1)/180) - (\pi \times A2° \times (Re2 - Ri2)/180)$ hergestellt werden, die zwischen 0,5 und -0,5 mm liegen.

8. Verfahren zur Herstellung von Bauteilen aus Verbundwerkstoff nach einem der Ansprüche 4 bis 7, das einen Schritt der Polymerisierung eines Bindemittels des Verbundwerkstoffs nach dem Biegen aufweist.

9. Verfahren zur Herstellung von Bauteilen aus Verbundwerkstoff nach Anspruch 8, das einen Schritt des Entfernens eines Teils außerhalb des Bauteils aufweist, der die Gegenbiegung aufweist.

10. Verfahren zur Herstellung von Bauteilen aus Verbundwerkstoff nach einem der Ansprüche 4 bis 8, bei dem die Biegung und die Gegenbiegung symmetrische Biegungen von zwei Bauteilen formen, die zusammen gebogen und dann durch Schneiden zwischen der Biegung und der Gegenbiegung getrennt werden.

11. Verfahren zur Herstellung von Bauteilen aus Verbundwerkstoff nach einem der Ansprüche 4 bis 8, bei dem die Biegung und die Gegenbiegung als Biegungen entgegengesetzter Richtung eines Profilteils geformt werden.

**Claims**

1. Tooling for bending parts made of composite material, **characterized in that** it comprises a curving device having a rotating arm (17) articulated at a first one of its ends on a bending jig (15) and at a second one of its ends on a bending form (16), wherein the curving device is configured such that the movement of the arm (17) and of the bending form (16) makes the angle of the opposing bend dependent on the angle of the bend as the arm rotates and comprises, to that end:

  - means for gripping the free end of the part between a jaw (18) and the bending form (16);
  - means for rotating the arm (17) so as to bend the part on the jig (15) at the same time as the arm (17) moves the bending form (16); and
  - means for holding the bending form (16) at a constant inclination with respect to the jig (15), which places in tension that portion of the part between the bend and the opposing bend.

2. Bending tooling according to Claim 1, wherein the bending jig and the bending form are secured to gearwheels which are connected by a non-slipping belt, wherein the rotation of the arm about the bending jig brings the bending form into position for producing the bend and the opposing bend.

3. Bending tooling according to Claim 1 or 2, comprising a jaw facing the bending form, wherein the jaw and the bending form are designed to grip the part without slipping.

4. Process for manufacturing parts made of composite material, comprising at least one bending operation using a device according to any one of the preceding claims, **characterized in that** it comprises, for said bending operation, producing a bend and an opposing bend, with the opposing bend being in the opposite direction to the bend, said bending operation being designed to balance out, by means of the opposing bend, stresses in the material at the level of the bend, between the internal face and the external face of the bend, so as to tension the internal face of the bend, with the bend and the opposing bend being produced simultaneously, wherein said process comprises:

  - a step of gripping the free end of the part between the jaw (18) and the bending form (16);
  - a step of rotating the arm (17) so as to bend the part on the jig (15) at the same time as the arm (17) moves the bending form (16) in order to twist the end of the part in the opposite direction from the direction of bending on the jig (15) and in order to place in tension the web (31) of the part between the two bending regions in order to force the fibres of the layers of composite to slide over each other and thus prevent the appearance of creases at the level of the internal radii of the bend and the opposing bend.

5. Process for manufacturing parts made of composite material according to Claim 4, wherein the bend and the opposing bend are produced after a step of laying-up the composite material.

6. Process for manufacturing parts made of composite material according to Claim 5, wherein laying-up is performed either flat or with a slight curvature and comprises laying-up successive layers of composite materials.

7. Process for manufacturing parts made of composite material according to any one of Claims 4 to 6, wherein the bend and the opposing bend are created according to parameters such as $(n \times A1° \times (Re1 - Ri1) / 180) - (\pi \times A2° \times (Re2 - Ri2) / 180)$ between 0.5 and -0.5 mm.

8. Process for manufacturing parts made of composite material according to any one of Claims 4 to 7, comprising a step of polymerizing a binder of the composite material after bending.

9. Process for manufacturing parts made of composite material according to Claim 8, comprising a step of removing that portion, featuring the opposing bend, which is not included in the part.

10. Process for manufacturing parts made of composite material according to any one of Claims 4 to 8, wherein the bend and the opposing bend form symmetric bends of two parts bent together and then separated by cutting between the bend and the opposing bend.

11. Process for manufacturing parts made of composite material according to any one of Claims 4 to 8, wherein the bend and the opposing bend are formed as bends, in opposing directions, of a profile section.

**Fig. 1**

**Fig. 2**

1.7mn
0.52mn
0.73mn
1.23mn
0.23mn

**Fig. 3**

$$L = \pi A° \times (Re - Ri) / 180$$

**Fig. 4**

**Fig. 5**

**Fig. 6A**

**Fig. 6B**

**Fig. 7**

**Fig. 8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 8602314 A